# EUROPÄISCHE PATENTSCHRIFT

(11) **EP 3 769 933 B1**
(45) Veröffentlichungstag und Bekanntmachung des Hinweises auf die Patenterteilung: **27.04.2022**
(21) Anmeldenummer: 20176405.7
(22) Anmeldetag: 26.05.2020
(51) Int. Cl.: B29C 49/42, B29C 49/66, B29C 49/06, B29K 67/00, B29L 31/00

(54) **SYSTEM UND VERFAHREN ZUM HERSTELLEN EINES BEHÄLTERS**
SYSTEM AND METHOD FOR PRODUCING A CONTAINER
SYSTÈME ET PROCÉDÉ DE FABRICATION D'UN RÉCIPIENT

(30) Priorität: 26.07.2019 DE 102019120274
(43) Veröffentlichungstag der Anmeldung: 27.01.2021
(73) Patentinhaber: KRONES AG, 93073 Neutraubling (DE)
(72) Erfinder: HAHN, Wolfgang, 93073 Neutraubling (DE)
(74) Vertreter: Grünecker Patent- und Rechtsanwälte PartG mbB

(56) Entgegenhaltungen:
- FR-A1- 2 405 809
- US-A1- 2012 100 238
- US-B2- 9 725 293

## Beschreibung

Die Erfindung betrifft ein System, das eine Streckblasvorrichtung zum Blasen eines Behälters; eine Kühlvorrichtung zum Kühlen des geblasenen Behälters; und eine Beschichtungsvorrichtung zum Beschichten des gekühlten Behälters umfasst. Weiterhin betrifft die Erfindung ein Verfahren zum Herstellen eines Behälters.

### Stand der Technik

In der Getränkeabfülltechnik sind sogenannte Streckblasmaschinen bekannt, in denen Vorformlinge aus Kunststoff unter Wärmeeinwirkung zu Behältern (insbesondere PET-Flaschen) geblasen werden. Die Behälter müssen in der Regel zur weiteren Verarbeitung gekühlt werden, beispielsweise um ein Verformen der Behälter beim Befüllen mit einem kohlensäurehaltigen Getränk unter Druck zu verhindern. Nach dem Stand der Technik kann die Kühlung der Behälter durch ein Besprühen oder Umspülen mit Wasser erfolgen.

Weiterhin wird bei manchen Behältern aus Kunststoff im Innern eine Beschichtung aufgebracht, um ein Diffundieren von unerwünschten Stoffen aus dem Material des Vorformlings in das Getränk zu verhindern. Als Material für die Beschichtung kann SiO₂ verwendet werden. Zum Beschichten muss der geblasene Behälter jedoch trocken sein, was einen weiteren Schritt des Trocknens der Behälter erfordert. Daher ist ein Kühlen mit Wasser gemäß Stand der Technik nachteilig. Die Dokumente US2012/100238A1, US9725293B2 und FR2405809A1 beschreiben derartige Vorrichtungen und Verfahren aus dem Stand der Technik.

### Beschreibung der Erfindung

Aufgabe der Erfindung ist es, die oben genannten Nachteile zumindest teilweise zu mildern oder zu beseitigen.

Die Aufgabe wird gelöst durch ein erfindungsgemäßes System nach Patentanspruch 1.

Das erfindungsgemäße System umfasst: eine Streckblasvorrichtung zum Blasen eines Behälters, insbesondere einer Flasche; eine Kühlvorrichtung zum Kühlen des geblasenen Behälters mit Trockeneis-Partikeln oder Kohlendioxid-Gas; und eine Beschichtungsvorrichtung zum Beschichten des gekühlten Behälters, insbesondere im Innern des Behälters; wobei das System einen Transportpfad zum Transportieren des Behälters von der Streckblasvorrichtung zu der Kühlvorrichtung und anschließend zu der Beschichtungsvorrichtung umfasst; und wobei die Beschichtungsvorrichtung einen Ausleitpfad zum Ausleiten des beschichteten Behälters aufweist.

Die erfindungsgemäße Vorrichtung hat den Vorteil, dass der Behälter aufgrund der Kühlung mit CO₂-Gas oder -Partikeln trocken bleibt und problemlos beschichtet werden kann.

Die erfindungsgemäße Vorrichtung kann wie folgt weitergebildet werden.

Die Kühlvorrichtung kann ein Düsenelement umfassen, um einen Strahl der Trockeneis-Partikel oder des Kohlendioxid-Gases auf oder in den Behälter zu richten, insbesondere auf einen Bodenbereich des Behälters. Auf diese Weise kann ein Strahl des kühlenden CO2 als Gas oder als Partikel (CO2-Schneekristalle) gezielt auf die gewünschte Stelle gerichtet werden, insbesondere in das Innere des Behälters wenn noch eine Beschichtung aufzubringen ist.

Innerhalb der Beschichtungsvorrichtung kann ein Beschichtungspfad, auf dem ein Beschichten des Behälters erfolgt, und ein Umgehungspfad, auf dem kein Beschichten der Behälter erfolgt, vorgesehen sein, wobei sowohl der Beschichtungspfad als auch der Umgehungspfad im Ausleitpfad münden. Auf diese Weise kann das gleiche System für verschiedene Behälter eingesetzt werden. Falls eine Beschichtung nicht erforderlich ist oder nicht gewünscht wird, kann der Behälter auf dem Umgehungspfad an der eigentlichen Beschichtungseinrichtung vorbeigeführt werden, jedoch über den gleichen Ausleitpfad, auf dem auch die beschichteten Behälter die Beschichtungsvorrichtung verlassen, wieder ausgeführt werden.

Das System kann weiterhin umfassen: eine Etikettiervorrichtung zum Aufbringen eines Etiketts auf den geblasenen und gekühlten Behälter; und/oder eine Abfüllvorrichtung zum Befüllen des geblasenen und gekühlten Behälters und/oder eine Bedruckungsvorrichtung zum Bedrucken des geblasenen und gekühlten Behälters oder eines Etiketts; und/oder eine Verschließvorrichtung zum Verschließen des befüllten Behälters. Die gekühlten Behälter können somit anschließend verformungslos und durch den trockenen Zustand gut haftend mit einem Etikett versehen werden bzw. verformungslos befüllt werden. Die Abfüllvorrichtung und die Verschließvorrichtung können als Einheit mit beiden Funktionen ausgebildet sein.

Die Beschichtungsvorrichtung kann eine Abzweigung zum Abzweigen von beschichteten Behältern zu einer weiteren Abfüllvorrichtung aufweisen. Somit kann das gleiche System für eine andere Abfüllanlage eingesetzt werden.

Alternativ oder zusätzlich kann die Beschichtungsvorrichtung eine Zuführung zum Zuführen von zu beschichtenden Behältern von einer weiteren Streckblasvorrichtung aufweisen. Somit können Behälter von einer anderen Streckblasmaschine mit oder ohne Kühlung in die Beschichtungsvorrichtung eingebracht und beschichtet werden. Dies erhöht die Flexibilität des Systems.

Die Kühlvorrichtung kann eine Zuführung zum Zuführen und Kühlen von Behältern von einer weiteren Streckblasvorrichtung aufweisen. Auf diese Weise kann die Kühlung mit der Kühlvorrichtung auch für Behälter von einer anderen Streckblasmaschine eingesetzt werden. Die erhöht ebenfalls die Flexibilität des Systems.

Der Transportpfad kann eine Halterung zum Haltern des Behälters an einem Halsbereich des Behälters umfassen. Ein Haltern des Behälters (der Flasche) am Halsbereich (Neck) stellt eine vorteilhafte Art der Halterung dar, weil dadurch der Boden der Flasche gezielt und gut gekühlt werden kann.

Die Streckblasvorrichtung, die Kühlvorrichtung und die Beschichtungsvorrichtung können gemeinsam als eine Einheit ausgebildet sein. Somit stellt das System eine kompakte Einheit dar, in die Vorformlinge für die Behälter eingeführt und beschichtete Behälter ausgeführt werden können. Aufgrund der Kühlung mit CO₂ kann eine höhere Durchsatzrate als nach dem Stand der Technik mit Wasserkühlung erzielt werden.

Die oben genannte Aufgabe wird weiterhin gelöst durch ein Verfahren nach Anspruch 9.

Das erfindungsgemäße Verfahren zum Herstellen eines Behälters umfasst die Schritte: Blasen des Behälters in einer Streckblasvorrichtung; Kühlen des geblasenen Behälters mit Trockeneis-Partikeln oder Kohlendioxid-Gas in einer Kühlvorrichtung; Beschichten des gekühlten Behälters in einer Beschichtungsvorrichtung, insbesondere im Innern des Behälters; Transportieren des Behälters von der Streckblasvorrichtung zu der Kühlvorrichtung und anschließend zu der Beschichtungsvorrichtung auf einem Transportpfad; und Ausleiten des beschichteten Behälters aus der Beschichtungsvorrichtung auf einem Ausleitpfad.

Die Vorteile des erfindungsgemäßen Verfahrens bzw. dessen Weiterbildungen entsprechen jenen in Bezug auf das erfindungsgemäße System bzw. dessen Weiterbildungen, und es wird daher auf obige Ausführungen verwiesen.

Das erfindungsgemäße Verfahren kann folgendermaßen weitergebildet werden.

Der Schritt des Kühlens kann einen Schritt des Richtens eines Strahls der Trockeneis-Partikel oder des Kohlendioxid-Gases auf oder in den Behälter, insbesondere auf einen Bodenbereich des Behälters, mit einem Düsenelement der Kühlvorrichtung umfassen.

Das Beschichten des Behälters kann innerhalb der Beschichtungsvorrichtung auf einem Beschichtungspfad erfolgen und auf einem Umgehungspfad innerhalb der Beschichtungsvorrichtung kann kein Beschichten der Behälter erfolgen, wobei sowohl der Beschichtungspfad als auch der Umgehungspfad im Ausleitpfad münden können.

Weiterhin kann wenigstens einer der folgenden weiteren Schritte durchgeführt werden: Aufbringen eines Etiketts auf den geblasenen und gekühlten Behälter mit einer Etikettiervorrichtung und/oder Bedrucken des geblasenen und gekühlten Behälters oder eines Etiketts mit einer Bedruckungsvorrichtung; und/oder Befüllen des geblasenen und gekühlten Behälters mit einer Abfüllvorrichtung; und/oder Verschließen des befüllten Behälters mit einer Verschließvorrichtung.

Dies kann wiederum dahingehend weitergebildet werden, dass ein Abzweigen von beschichteten Behältern aus der Beschichtungsvorrichtung zu einer weiteren Abfüllvorrichtung und/oder ein Zuführen von zu beschichtenden Behältern zu der Beschichtungsvorrichtung von einer weiteren Streckblasvorrichtung vorgesehen sein kann.

Das Verfahren kann den weiteren Schritten des Zuführens und Kühlens von Behältern von einer weiteren Streckblasvorrichtung zu der Kühlvorrichtung umfassen.

Ein Haltern des Behälters auf dem Transportpfad kann an einem Halsbereich des Behälters vorgesehen sein.

Weitere Merkmale und beispielhafte Ausführungsformen sowie Vorteile der vorliegenden Erfindung werden nachfolgend anhand der Zeichnung näher erläutert. Es versteht sich, dass diese Ausführungsform nicht den gesamten Bereich der vorliegenden Erfindung erschöpfen kann. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1 A,B: zeigen eine erste Ausführungsform des erfindungsgemäßen Systems.
- Fig. 2 A,B,C: zeigen eine zweite Ausführungsform des erfindungsgemäßen Systems.
- Fig. 3: zeigt eine dritte Ausführungsform des erfindungsgemäßen Systems.
- Fig. 4: zeigt eine vierte Ausführungsform des erfindungsgemäßen Systems.
- Fig. 5: zeigt eine fünfte Ausführungsform des erfindungsgemäßen Systems.

### Ausführungsformen

Erfindungsgemäß wird in einem Abschnitt aus einer Streckblasvorrichtung und einer Beschichtungsvorrichtung eine Trockenkühlung mit CO₂-Schnee oder CO₂-Gas der geblasenen Behälter vor deren Beschichtung durchgeführt.

Die C02-Schneepartikel bzw. Trockeneispartikel werden aus mit Druck beaufschlagtem, flüssigem CO₂ erzeugt, beispielsweise aus einer Druckflasche, wobei aus einer Düse austretendes flüssiges CO₂ unter atmosphärischem Druck expandiert und einen plötzlichen Phasenübergang in Trockeneispartikel (Trockeneis-Schneekristalle) durchläuft. Die austretenden Trockeneispartikel können beim Auftreffen auf die Oberfläche (etwa im Innenraum) eines Behälters schlagartig von der festen in die gasförmige Phase übergehen (Sublimation), wobei sich das Volumen um einen Faktor von einigen Hundert vergrößert. Dabei kontaktiert das entstehende kalte CO₂-Gas die Oberfläche des Behälters und kühlt diesen. Weiterhin sublimiert an der Oberfläche auftreffender CO2-Schnee unter Entzug von Verdampfungswärme aus dem Behältermaterial. Alternativ kann aus der Druckflasche auch ein Strom aus kaltem CO₂-Gas auf bzw. in den Behälter geleitet werden, ohne zuvor in Trockeneis-Schnee umgewandelt worden zu sein.

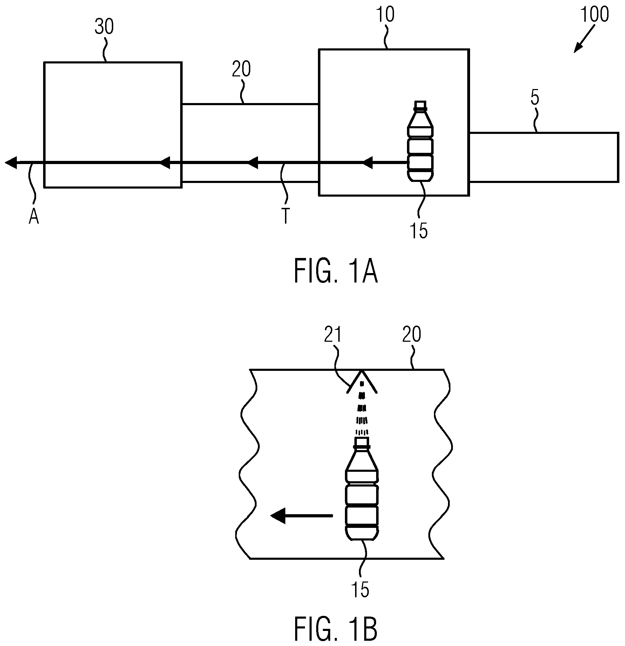

Figuren 1A, B zeigen eine erste Ausführungsform des erfindungsgemäßen Systems 100.

Das erfindungsgemäße System 100 umfasst: eine Streckblasvorrichtung 10 zum Blasen eines Behälters 15, insbesondere einer Flasche; eine Kühlvorrichtung 20 zum Kühlen des geblasenen Behälters mit Trockeneis-Partikeln oder Kohlendioxid-Gas; und eine Beschichtungsvorrichtung 30 zum Beschichten des gekühlten Behälters, insbesondere im Innern des Behälters; wobei das System einen Transportpfad T zum Transportieren des Behälters von der Streckblasvorrichtung 10 zu der Kühlvorrichtung 20 und anschließend zu der Beschichtungsvorrichtung 30 umfasst; und wobei die Beschichtungsvorrichtung 30 einen Ausleitpfad A zum Ausleiten des beschichteten Behälters aufweist. In einer Erhitzungsvorrichtung (Heizofen) 5 werden die Vorformlinge für die Behälter auf eine Verarbeitungstemperatur von etwa 80 bis 100 °C erhitzt. Die so erhitzten Vorformlinge werden dann in der Steckblasvorrichtung 10 dem Streckblasprozess unterworfen.

Die Kühlvorrichtung 20 umfasst ein Düsenelement 21, um einen Strahl der Trockeneis-Partikel oder des Kohlendioxid-Gases auf den Behälter, insbesondere auf einen Bodenbereich des Behälters (nicht dargestellt), oder (wie hier gezeigt) in den Behälter zu richten. Ein Strahl des kühlenden CO₂ (Gas oder Schnee) wird in das Innere des Behälters gerichtet.

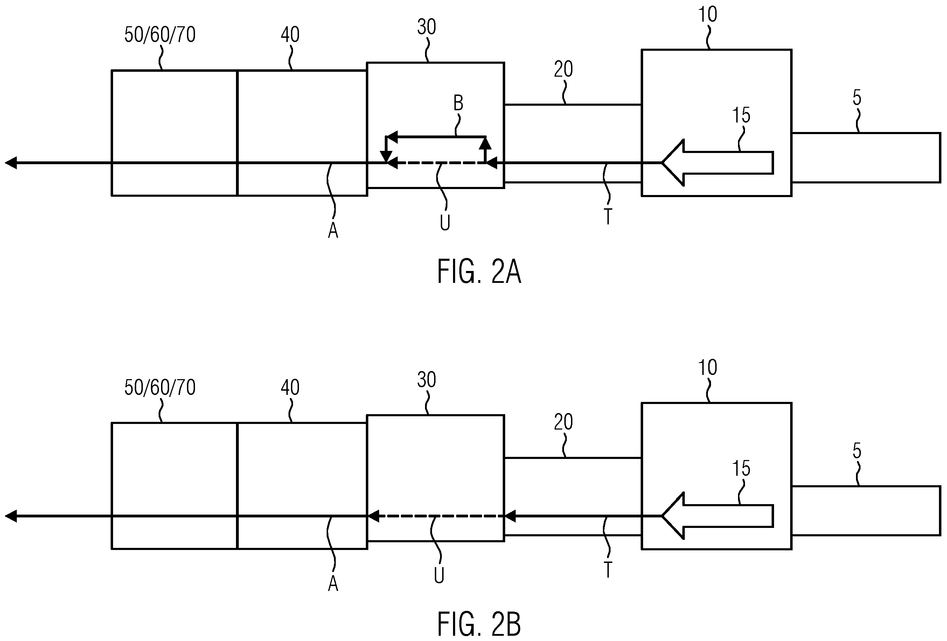

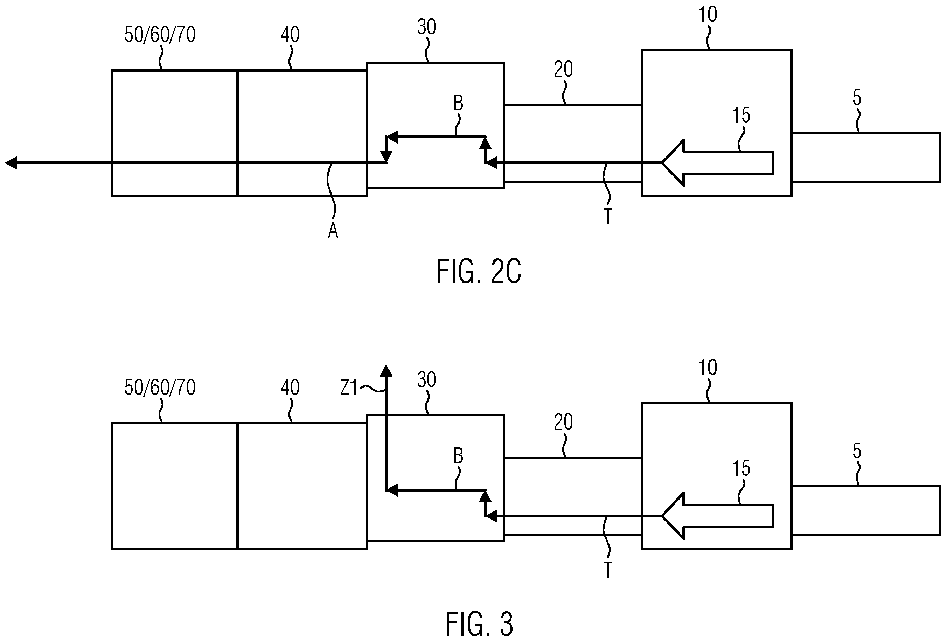

Figuren 2A, 2B, 2C zeigen eine zweite Ausführungsform des erfindungsgemäßen Systems 200.

Dieses System 200 entspricht mit einer Abwandlung des Transports der Behälter innerhalb der Beschichtungsvorrichtung 30 der ersten Ausführungsform gemäß Figur 1 und mit weiteren Komponenten, wie nachfolgend beschrieben wird. Hier und im Folgenden zeigt der flächige Pfeil den Transport eines Behälters 15 an.

Innerhalb der Beschichtungsvorrichtung 30 gibt es einen Beschichtungspfad B, auf dem ein Beschichten des Behälters erfolgt, und einen Umgehungspfad U, auf dem kein Beschichten der Behälter erfolgt. Sowohl der Beschichtungspfad B als auch der Umgehungspfad U münden im Ausleitpfad A. Falls eine Beschichtung nicht erforderlich ist oder nicht gewünscht wird, kann der Behälter auf dem Umgehungspfad U an der eigentlichen Beschichtungseinrichtung vorbeigeführt werden.

Das System umfasst in dieser Ausführungsform weiterhin eine Etikettiervorrichtung 40 zum Aufbringen eines Etiketts auf den geblasenen und gekühlten Behälter und/oder eine Bedruckungsvorrichtung 70 zum Bedrucken des geblasenen und gekühlten Behälters oder eines Etiketts; eine Abfüllvorrichtung 50 zum Befüllen des geblasenen und gekühlten Behälters; und eine Verschließvorrichtung 60 zum Verschließen des befüllten Behälters. Die Abfüllvorrichtung 50 und die Verschließvorrichtung 60 sind hier als Einheit ausgebildet. Die gekühlten Behälter können somit nach der Beschichtung verformungslos und durch den trockenen Zustand gut haftend mit einem Etikett versehen werden bzw. verformungslos befüllt werden.

Figur 3 zeigt eine dritte Ausführungsform des erfindungsgemäßen Systems 300.

Dieses System 300 entspricht mit einer Abwandlung des Transports der Behälter innerhalb der Beschichtungsvorrichtung 30 der zweiten Ausführungsform gemäß Figur 2, wie nachfolgend beschrieben wird.

Die Beschichtungsvorrichtung 30 weist in dieser Ausführungsform eine Abzweigung Z1 zum Abzweigen von beschichteten Behältern zu einer weiteren Abfüllvorrichtung auf. Auf diese Weise kann das erfindungsgemäße System 100 der ersten Ausführungsform zusätzlich auch für eine andere Abfüllanlage eingesetzt werden.

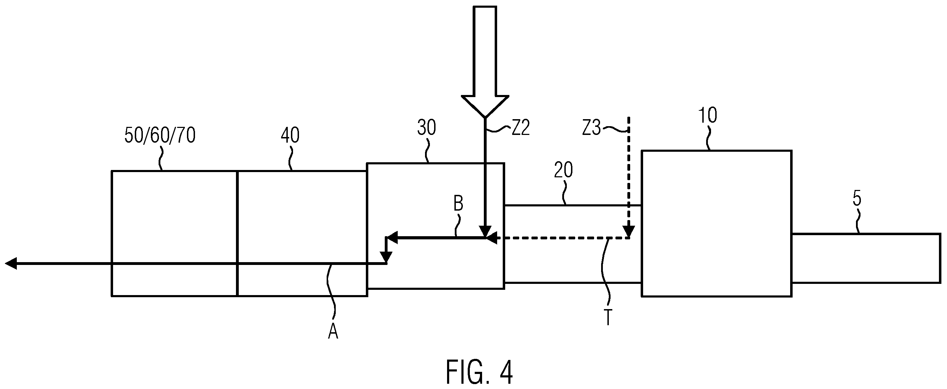

Figur 4 zeigt eine vierte Ausführungsform des erfindungsgemäßen Systems 400.

Dieses System 400 entspricht mit einer Abwandlung des Transports der Behälter innerhalb der Beschichtungsvorrichtung 30 und/oder in der Kühlvorrichtung 20 der zweiten Ausführungsform gemäß Figur 2 oder der dritten Ausführungsform 300 gemäß Figur 3, wie nachfolgend beschrieben wird.

Die Beschichtungsvorrichtung umfasst in dieser Ausführungsform 400 eine Zuführung Z2 zum Zuführen von zu beschichtenden Behältern von einer weiteren Streckblasvorrichtung auf. Auf diese Weise kann die Beschichtungsvorrichtung auch für Behälter von einer anderen Streckblasvorrichtung eingesetzt werden. Die Zuleitung der Behälter kann beispielsweise mittels Lufttransport erfolgen.

Alternativ oder zusätzlich kann eine Zuführung Z3 von einer anderen Streckblasvorrichtung auf den Transportpfad T erfolgen, so dass Behälter von dort in der Kühlvorrichtung 20 gekühlt und in der Beschichtungsvorrichtung 30 beschichtet werden können. Auf diese Weise ist es beispielsweise möglich, die Streckblasvorrichtung 10 auf eine andere Behälter-/Flaschensorte umzurüsten, während gleichzeitig der Betrieb des Kühlens und Beschichtens von Behältern von der anderen Streckblasvorrichtung erfolgt.

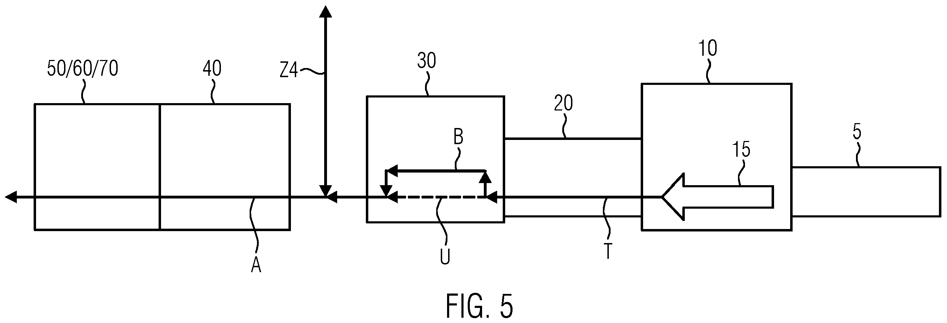

Figur 5 zeigt eine fünfte Ausführungsform des erfindungsgemäßen Systems 500.

Dieses System 500 entspricht der zweiten Ausführungsform gemäß Figur 2, der dritten Ausführungsform 300 gemäß Figur 3 oder der vierten Ausführungsform 400 gemäß Figur 4, jedoch mit nachfolgend beschriebener Ergänzung.

In dieser fünften Ausführungsform enthält das System 500 weiterhin eine Zuführung / Abzweigung Z4 zwischen der Beschichtungsvorrichtung 30 und der Etikettiervorrichtung 40. Darüber können Behälter von einer anderen Anlage zum Etikettieren eingebracht werden oder in der Beschichtungsvorrichtung 30 beschichtete Behälter können über den gleichen Weg einer anderen Anlage zugeführt werden.

Die dargestellten Ausführungsformen sind lediglich beispielhaft und der vollständige Umfang der vorliegenden Erfindung wird durch die Ansprüche definiert.

## Patentansprüche

1. System (100), umfassend:
eine Streckblasvorrichtung (10) zum Blasen eines Behälters (15), insbesondere einer Flasche;
eine Kühlvorrichtung (20) zum Kühlen des geblasenen Behälters (15) mit Trockeneis-Partikeln oder Kohlendioxid-Gas; und
eine Beschichtungsvorrichtung (30) zum Beschichten des gekühlten Behälters (15), insbesondere im Innern des Behälters;
**dadurch gekennzeichnet, dass** das System einen Transportpfad zum Transportieren des Behälters von der Streckblasvorrichtung (10) zu der Kühlvorrichtung (20) und anschließend zu der Beschichtungsvorrichtung (30) umfasst; und
wobei die Beschichtungsvorrichtung (30) einen Ausleitpfad zum Ausleiten des beschichteten Behälters (15) aufweist.

2. System nach Anspruch 1, wobei die Kühlvorrichtung ein Düsenelement (21) umfasst, um einen Strahl der Trockeneis-Partikel oder des Kohlendioxid-Gases auf oder in den Behälter zu richten, insbesondere auf einen Bodenbereich des Behälters.

3. System nach Anspruch 1 oder 2, wobei innerhalb der Beschichtungsvorrichtung ein Beschichtungspfad, auf dem ein Beschichten des Behälters erfolgt, und ein Umgehungspfad, auf dem kein Beschichten der Behälter erfolgt, vorgesehen sind, wobei sowohl der Beschichtungspfad als auch der Umgehungspfad im Ausleitpfad münden.

4. System nach einem der Ansprüche 1 bis 3, wobei das System weiterhin umfasst:
eine Etikettiervorrichtung (40) zum Aufbringen eines Etiketts auf den geblasenen und gekühlten Behälter und/oder eine Bedruckungsvorrichtung (70) zum Bedrucken des geblasenen und gekühlten Behälters oder eines Etiketts; und/oder
eine Abfüllvorrichtung (50) zum Befüllen des geblasenen und gekühlten Behälters; und/oder
eine Verschließvorrichtung (60) zum Verschließen des befüllten Behälters.

5. System nach Anspruch 4, wobei die Beschichtungsvorrichtung eine Abzweigung zum Abzweigen von beschichteten Behältern zu einer weiteren Abfüllvorrichtung aufweist und/oder wobei die Beschichtungsvorrichtung eine Zuführung zum Zuführen von zu beschichtenden Behältern von einer weiteren Streckblasvorrichtung aufweist.

6. System nach einem der Ansprüche 1 bis 5, wobei die Kühlvorrichtung eine Zuführung zum Zuführen und Kühlen von Behältern von einer weiteren Streckblasvorrichtung aufweist.

7. System nach einem der Ansprüche 1 bis 6, wobei der Transportpfad eine Halterung zum Haltern des Behälters an einem Halsbereich des Behälters umfasst.

8. System nach einem der Ansprüche 1 bis 7, wobei die Streckblasvorrichtung, die Kühlvorrichtung und die Beschichtungsvorrichtung gemeinsam als eine Einheit ausgebildet sind.

9. Verfahren zum Herstellen eines Behälters, umfassend die Schritte:
Blasen des Behälters in einer Streckblasvorrichtung (10);
Kühlen des geblasenen Behälters mit Trockeneis-Partikeln oder Kohlendioxid-Gas in einer Kühlvorrichtung (20);
Beschichten des gekühlten Behälters in einer Beschichtungsvorrichtung (30), insbesondere im Innern des Behälters;
Transportieren des Behälters von der Streckblasvorrichtung (10) zu der Kühlvorrichtung (20) und anschließend zu der Beschichtungsvorrichtung (30) auf einem Transportpfad; und
Ausleiten des beschichteten Behälters (15) aus der Beschichtungsvorrichtung (30) auf einem Ausleitpfad.

10. Verfahren nach Anspruch 9, wobei der Schritt des Kühlens einen Schritt des Richtens eines Strahls der Trockeneis-Partikel oder des Kohlendioxid-Gases auf oder in den Behälter, insbesondere auf einen Bodenbereich des Behälters, mit einem Düsenelement (21) der Kühlvorrichtung umfasst.

11. Verfahren nach Anspruch 9 oder 10, wobei das Beschichten des Behälters innerhalb der Beschichtungsvorrichtung auf einem Beschichtungspfad erfolgt und auf einem Umgehungspfad innerhalb der Beschichtungsvorrichtung kein Beschichten der Behälter erfolgt, wobei sowohl der Beschichtungspfad als auch der Umgehungspfad im Ausleitpfad münden.

12. Verfahren nach einem der Ansprüche 9 bis 11, wobei wenigstens einer der folgenden weiteren Schritte durchgeführt wird:
Aufbringen eines Etiketts auf den geblasenen und gekühlten Behälter mit einer Etikettiervorrichtung (40) und/oder Bedrucken des geblasenen und gekühlten Behälters oder eines Etiketts mit einer Bedruckungsvorrichtung (70); und/oder
Befüllen des geblasenen und gekühlten Behälters mit einer Abfüllvorrichtung (50); und/oder
Verschließen des befüllten Behälters mit einer Verschließvorrichtung (60).

13. Verfahren nach Anspruch 12, weiterhin umfassend den Schritt:
Abzweigen von beschichteten Behältern aus der Beschichtungsvorrichtung zu einer weiteren Abfüllvorrichtung und/oder Zuführen von zu beschichtenden Behältern zu der Beschichtungsvorrichtung von einer weiteren Streckblasvorrichtung.

14. Verfahren nach einem der Ansprüche 9 bis 13, mit den weiteren Schritten des Zuführens und Kühlens von Behältern von einer weiteren Streckblasvorrichtung zu der Kühlvorrichtung.

15. Verfahren nach einem der Ansprüche 9 bis 14, wobei ein Haltern des Behälters auf dem Transportpfad an einem Halsbereich des Behälters vorgesehen ist.

## Claims

1. System (100) comprising:
a stretch blow moulding device (10) for blowing a container (15), in particular a bottle; a cooling device (20) for cooling the blown container (15) using dry ice particles or carbon dioxide gas; and
a coating device (30) for coating the cooled container (15), in particular inside the container;
**characterised in that** the system comprises a transport path for transporting the container from the stretch blow moulding device (10) to the cooling device (20) and subsequently to the coating device (30); and
the coating device (30) having a discharge path for discharging the coated container (15).

2. System according to claim 1, wherein the cooling device comprises a nozzle element (21) for directing a stream of the dry ice particles or the carbon dioxide gas onto or into the container, in particular onto a bottom region of the container.

3. System according to either claim 1 or claim 2, wherein a coating path on which the container is coated and a bypass path on which the containers are not coated are provided within the coating device, wherein both the coating path and the bypass path open into the discharge path.

4. System according to any of claims 1 to 3, the system further comprising:
a labelling device (40) for applying a label to the blown and cooled container and/or a printing device (70) for printing the blown and cooled container or a label; and/or
a filling device (50) for filling the blown and cooled container; and/or
a closing device (60) for closing the filled container.

5. System according to claim 4, wherein the coating device has a branch for diverting coated containers to a further filling device and/or wherein the coating device has a feed for feeding containers to be coated from a further stretch blow moulding device.

6. System according to any of claims 1 to 5, wherein the cooling device comprises a feed for feeding and cooling containers from a further stretch blow moulding device.

7. System according to any of claims 1 to 6, wherein the transport path comprises a holder for holding the container at a neck region of the container.

8. System according to any of claims 1 to 7, wherein the stretch blow moulding device, the cooling device and the coating device are formed together as a unit.

9. Method for producing a container, comprising the steps of:
blowing the container in a stretch blow moulding device (10);
cooling the blown container using dry ice particles or carbon dioxide gas in a cooling device (20);
coating the cooled container in a coating device (30), in particular inside the container;
transporting the container from the stretch blow moulding device (10) to the cooling device (20) and subsequently to the coating device (30) on a transport path; and
discharging the coated container (15) from the coating device (30) on a discharge path.

10. Method according to claim 9, wherein the step of cooling comprises a step of directing a stream of the dry ice particles or the carbon dioxide gas onto or into the container, in particular onto a bottom region of the container, using a nozzle element (21) of the cooling device.

11. Method according to either claim 9 or claim 10, wherein the container is coated within the coating device on a coating path and the containers are not coated on a bypass path within the coating device, wherein both the coating path and the bypass path open into the discharge path.

12. Method according to any of claims 9 to 11, wherein at least one of the following further steps is carried out:
applying a label to the blown and cooled container using a labelling device (40) and/or
printing the blown and cooled container or a label using a printing device (70); and/or
filling the blown and cooled container using a filling device (50); and/or
closing the filled container using a closing device (60).

13. Method according to claim 12, further comprising the step of:
diverting coated containers from the coating device to a further filling device and/or
feeding containers to be coated to the coating device from a further stretch blow moulding device.

14. Method according to any of claims 9 to 13, comprising the further steps of feeding and cooling containers from another stretch blow moulding device to the cooling device.

15. Method according to any of claims 9 to 14, wherein the container is held on the transport path at a neck region of the container.

## Revendications

1. Système (100), comprenant
un dispositif d'étirage-soufflage (10) pour souffler un récipient (15), en particulier une bouteille ;
un dispositif de refroidissement (20) pour refroidir le récipient soufflé (15) avec des particules de glace carbonique ou du dioxyde de carbone gazeux ; et
un dispositif de revêtement (30) pour revêtir le récipient refroidi (15), en particulier à l'intérieur du récipient ;
**caractérisé en ce que** le système comprend un chemin de transport pour transporter le récipient depuis le dispositif d'étirage-soufflage (10) jusqu'au dispositif de refroidissement (20) et ensuite jusqu'au dispositif de revêtement (30) ; et
dans lequel le dispositif de revêtement (30) comprend un chemin de décharge pour décharger le récipient revêtu (15).

2. Système selon la revendication 1, dans lequel le dispositif de refroidissement comprend un élément de buse (21) pour diriger un jet des particules de glace carbonique ou du dioxide de carbone gazeux sur, ou dans, le récipient, en particulier sur une zone de fond du récipient.

3. Système selon la revendication 1 ou 2, dans lequel il est prévu, à l'intérieur du dispositif de revêtement, un chemin de revêtement, sur lequel un revêtement du récipient est effectué, et un chemin de contournement, sur lequel aucun revêtement du récipient n'est effectué, le chemin de revêtement et le chemin de contournement débouchant tous deux dans le chemin de décharge.

4. Système selon l'une quelconque des revendications 1 à 3, ledit système comprenant en outre :
un dispositif d'étiquetage (40) pour appliquer une étiquette sur le récipient soufflé et refroidi et/ou un dispositif d'impression (70) pour imprimer sur le récipient soufflé et refroidi ou sur une étiquette ; et/ou
un dispositif de remplissage (50) pour remplir le récipient soufflé et refroidi ; et/ou
un dispositif de fermeture (60) pour fermer le récipient rempli.

5. Système selon la revendication 4, dans lequel le dispositif de revêtement comprend une déviation pour dévier des récipients revêtus vers un autre dispositif de remplissage et/ou dans lequel le dispositif de revêtement comprend une voie d'acheminement pour acheminer des récipients à revêtir depuis un autre dispositif d'étirage-soufflage.

6. Système selon l'une des revendications 1 à 5, dans lequel le dispositif de refroidissement comprend une voie d'acheminement pour acheminer et refroidir des récipients provenant d'un autre dispositif d'étirage-soufflage.

7. Système selon l'une des revendications 1 à 6, dans lequel le chemin de transport comprend un support pour maintenir le récipient sur une zone de goulot du récipient.

8. Système selon l'une des revendications 1 à 7, dans lequel le dispositif d'étirage-soufflage, le dispositif de refroidissement et le dispositif de revêtement sont formés ensemble en tant qu'unité.

9. Procédé de fabrication d'un récipient, comprenant les étapes consistant à :
souffler le récipient dans un dispositif d'étirage-soufflage (10) ;
refroidir le récipient soufflé avec des particules de glace carbonique ou du dioxyde de carbone gazeux dans un dispositif de refroidissement (20) ;
revêtir le récipient refroidi dans un dispositif de revêtement (30), en particulier à l'intérieur du récipient ;
transporter le récipient depuis le dispositif d'étirage-soufflage (10) jusqu'au dispositif de refroidissement (20), puis jusqu'au dispositif de revêtement (30) sur un chemin de transport ; et
décharger le récipient revêtu (15) hors du dispositif de revêtement (30) sur un chemin de décharge.

10. Procédé selon la revendication 9, dans lequel l'étape de refroidissement comprend une étape consistant à diriger un jet des particules de glace carbonique ou du dioxyde de carbone gazeux sur, ou dans, le récipient, en particulier sur une partie du fond du récipient, avec un élément de buse (21) du dispositif de refroidissement.

11. Procédé selon la revendication 9 ou 10, dans lequel le revêtement du récipient à l'intérieur du dispositif de revêtement est effectué sur un chemin de revêtement et aucun revêtement du récipient n'est effectué sur un chemin de contournement à l'intérieur du dispositif de revêtement, le chemin de revêtement et le chemin de contournement débouchant tous deux dans le chemin de décharge.

12. Procédé selon l'une des revendications 9 à 11, dans lequel on effectue au moins l'une des étapes supplémentaires suivantes :
application d'une étiquette sur le récipient soufflé et refroidi au moyen d'un dispositif d'étiquetage (40) et/ou impression du récipient soufflé et refroidi ou d'une étiquette au moyen d'un dispositif d'impression (70) ; et/ou
remplissage du récipient soufflé et refroidi avec un dispositif de remplissage (50) ; et/ou
fermeture du récipient rempli à l'aide d'un dispositif de fermeture (60).

13. Procédé selon la revendication 12, comprenant en outre l'étape consistant à :
dévier des récipients revêtus à partir du dispositif de revêtement vers un autre dispositif de remplissage et/ou acheminer des récipients à revêtir vers le dispositif de revêtement à partir d'un autre dispositif d'étirage-soufflage.

14. Procédé selon l'une des revendications 9 à 13, comprenant les étapes supplémentaires consistant à acheminer et à refroidir des récipients depuis un autre dispositif d'étirage-soufflage vers le dispositif de refroidissement.

15. Procédé selon l'une des revendications 9 à 14, dans lequel un maintien du récipient sur le chemin de transport est prévu au niveau d'une zone de goulot du récipient.
